# EUROPEAN PATENT APPLICATION

(11) **EP 4 693 622 A1**
(43) Date of publication of application: **11.02.2026**
(21) Application number: 25194273.6
(22) Date of filing: 06.08.2025
(51) Int. Cl.: H01M 16/00, B60L 3/12, B60L 1/00, B60W 20/00, B60W 50/00, B60L 58/12, B60L 15/20, B60L 50/75, B60L 58/33, B60W 20/12, B60L 3/00, B60W 20/11, B60L 58/40

(54) **INTEGRATED POWERTRAIN CONTROL STRATEGY AND NAVIGATION SYSTEM FOR FUEL CELL ELECTRIC VEHICLES**

(30) Priority: 06.08.2024 US 202418795875
(71) Applicant: Robert Bosch GmbH, 70442 Stuttgart (DE)
(72) Inventor: Van Brunt, Alexander John, Sunnyvale, CA, 94085 (US); Braaten, Jonathan, Sunnyvale, CA, 94086 (US); Stuehmeier, Bjoern, Santa Clara, CA, 95054 (US); Mehrazi, Shirin, San Jose, CA, 95134 (US); Christensen, Jake, Elk Grove, CA, 95758 (US)
(74) Representative: Isarpatent

(57) **Abstract**

Systems and methods for operating a hydrogen-battery powertrain of a fuel cell electric vehicle are disclosed. The methods advantageously adopt a proactive control strategy that leverages navigation information to improve fuel economy, reduce degradation, and improve thermal management. Particularly, an expected route of the vehicle is determined based on navigation information provided by a navigation system. Based on the expected route, control-strategy relevant characteristics of the drive cycle are predicted, at least including a power requirements profile of the battery-hydrogen powertrain. The control-strategy relevant characteristics of the drive cycle are leveraged to provide optimal control strategies that improve fuel economy, reduce degradation, and improve thermal management.

## Description

### FIELD

The devices and methods disclosed in this document relate to fuel cell electric vehicles and, more particularly, to optimizing control and operation of a powertrain depending on navigation information.

### BACKGROUND

Unless otherwise indicated herein, the materials described in this section are not admitted to be the prior art by inclusion in this section.

Successful widespread penetration of hydrogen fuel cell electric vehicles into the transport market requires fuel cell systems that meet performance, fuel economy, and durability targets. Among other considerations, the design and operational strategy of the coupled battery-hydrogen powertrain system play a key role in meeting these targets. This is achieved through various means, including thermal and battery management, operation of the pressure, humidity, and flow of hydrogen to the fuel cell, and voltage clipping of the fuel cell stack.

Typical powertrains are based on a feedback response. For example, the request from the driver is parsed as a speed error in a controller, which is then converted to a torque request to the powertrain. The system pulls the required power from the battery and fuel cell in response while also monitoring temperature, voltage, and other parameters.

To a large degree, such a response-driven control system is necessary due to the inherent unpredictability of many drive cycles and routes. However, a purely response-driven control strategy can lead to suboptimal performance because it does not take into account all available information about the drive cycle and route. What is needed is a proactive control system that considers future information about the drive cycle and route when such future information can be reasonably predicted.

### SUMMARY

A method for operating a fuel cell electric vehicle is disclosed. The method comprises determining, with a navigation system, a current location of the vehicle. The method further comprises predicting, with a controller, a power requirements profile of the vehicle for a prediction period based on the current location of the vehicle. The method further comprises adjusting, with the controller, an operation of at least one component in a battery-hydrogen powertrain of the vehicle depending on the predicted power requirements profile.

### BRIEF DESCRIPTION OF THE DRAWINGS

The foregoing aspects and other features of the system and method are explained in the following description, taken in connection with the accompanying drawings.
FIG. 1 shows an exemplary fuel cell electric vehicle.
FIG. 2 shows exemplary components of a battery-hydrogen powertrain of the fuel cell electric vehicle.
FIG. 3 shows a flow diagram for a method for operating a fuel cell electric vehicle.
FIG. 4 shows an exemplary power requirements profile that is determined based on the expected route.

### DETAILED DESCRIPTION

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles of the disclosure as would normally occur to one skilled in the art to which this disclosure pertains.

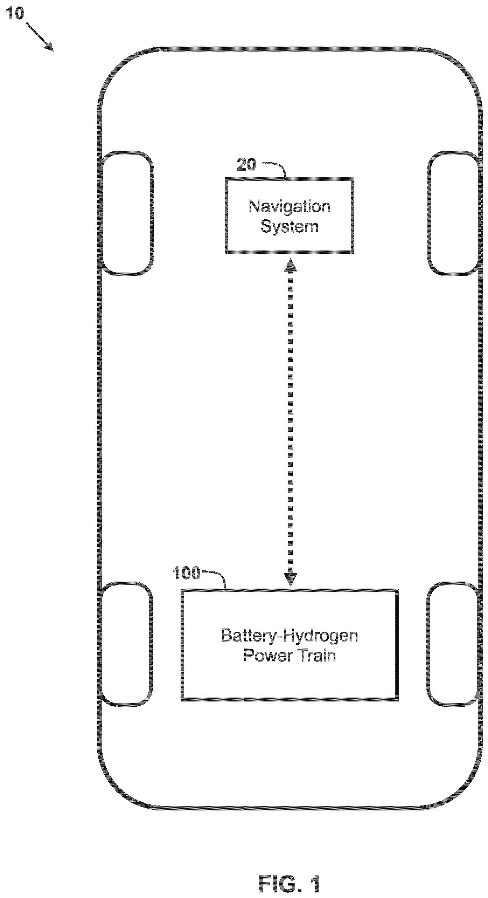

FIG. 1 shows an exemplary fuel cell electric vehicle 10. The fuel cell electric vehicle 10 includes a battery-hydrogen powertrain 100 and a navigation system 20. The battery-hydrogen powertrain 100 advantageously adopts a proactive control strategy that leverages navigation information provided by the navigation system 20 to improve fuel economy, reduce degradation, and improve thermal management. In particular, a controller of the battery-hydrogen powertrain 100 or the navigation system 20 determines an expected route of the vehicle based on navigation information provided by the navigation system 20. Based on the expected route, the controller predicts control-strategy relevant characteristics of the drive cycle, at least including a power requirements profile of the battery-hydrogen powertrain 100, but also including, for example, a hydrogen fuel consumption profile, a degradation profile, and a thermal profile for the battery-hydrogen powertrain 100. These control-strategy relevant characteristics of the drive cycle are leveraged by the controller of the battery-hydrogen powertrain 100 to provide optimal control strategies that improves fuel economy, reduces degradation, and improves thermal management.

The proactive control strategy of the battery-hydrogen powertrain 100 in the fuel cell electric vehicle 10 yields a variety of improvements compared to a purely reactive control strategy. For example, a purely reactive system might take the traction battery to a full state-of-charge before it travels on a predictable downhill slope, which would lead to a loss of utilization of the regenerative brakes and might require a shut-down of the fuel cell power module due to the inability of the fully-charged battery to accommodate the power surplus at the minimum viable power output of the fuel cell stack. In another example, a purely reactive system would predict intermediate interruptions of the drive cycle caused by rest stops taken by the driver, and would not predict system shutdown at the end of the route upon reaching the final destination. In contrast, with the proactive control strategy of the battery-hydrogen powertrain 100, these stops can be accounted for, and the system can thus be brought into a safe state, or a shutdown procedure can be initiated in the last minutes of the drive, addressing both lifetime and efficiency concerns.

### Exemplary Battery-Hydrogen Powertrain

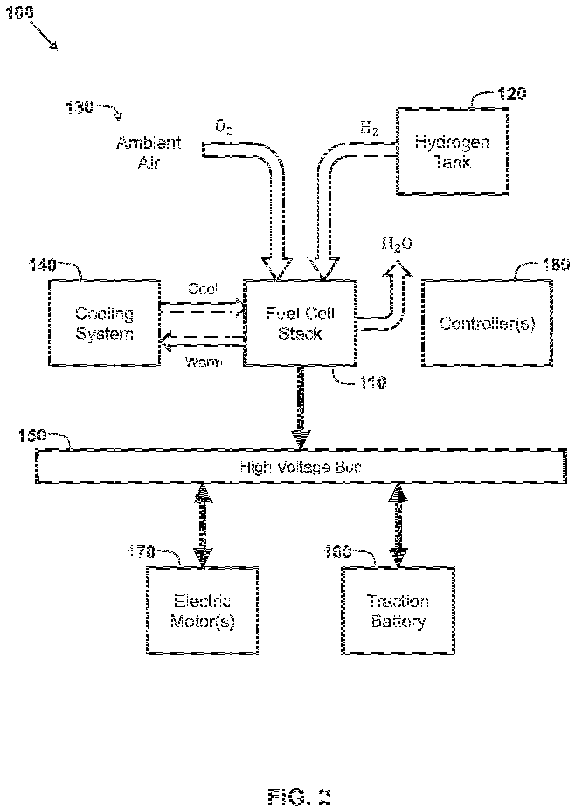

FIG. 2 shows exemplary components of the battery-hydrogen powertrain 100 of the fuel cell electric vehicle 10. In the illustrated example, the battery-hydrogen powertrain 100 includes a fuel cell stack 110, a hydrogen tank 120, a cooling system 140, a high voltage bus 150, a traction battery 160, one or more electric motors 170, and one or more controller(s) 180. It should be appreciated, of course, that the battery-hydrogen powertrain 100 may include a variety of additional components that are not shown or described in detail herein, such as power electronics, valves, injectors, air compressors, sensors, flow meters, and the like that would be conventionally included in a battery-hydrogen powertrain of a fuel cell electric vehicle 10.

The fuel cell stack 110 is configured to receive hydrogen fuel in the form of hydrogen gas (H₂) from the hydrogen tank 120, as well as oxygen gas (O₂) from the ambient air 130. The fuel cell stack 110 is made up of a plurality of hydrogen fuel cells. Each fuel cell operates by converting chemical energy from the hydrogen gas (H₂) into electrical energy in the form of direct current (DC) through an electrochemical reaction. The hydrogen fuel cells are, for example, Proton Exchange Membrane (PEM) fuel cells, but may of course take a variety of other suitable forms. At least in the case of PEM fuel cells, each hydrogen fuel cell consists of two electrodes: an anode and a cathode, separated by an electrolyte. The hydrogen gas (H₂) is supplied to the anode, where it splits into protons and electrons. The protons pass through the electrolyte to the cathode, while the electrons travel through an external circuit, generating an electric current. At the cathode, the oxygen gas (O₂) from the ambient air 130 combines with the protons and electrons to form water (H₂O), the only byproduct.

The cooling system 140 is configured to maintain optimal operating temperatures and ensure efficient performance of the fuel cell stack 110. The cooling system 140 typically includes a coolant loop that circulates a liquid coolant, such as water or a water-glycol mixture, through the fuel cell stack 110. Heat generated by the electrochemical reactions within the fuel cell stack 110 is absorbed by the coolant, which then flows through a radiator of the cooling system 140 where the heat is dissipated into the ambient air 130. A pump of the cooling system 140 drives the circulation of the coolant. This cooling process ensures that the fuel cell stack 110 operates within its ideal temperature range, enhancing efficiency, longevity, and safety.

Power from the fuel cell stack 110 is output to the high voltage bus 150. Particularly, an electrical output of the fuel cell stack 110 is operably connected to the high voltage bus 150 via power conditioning electronics including, for example, a unidirectional DC/DC converter that converts the voltage level at the electrical output of the fuel cell stack 110 to match the requirements of the high voltage bus. The high voltage bus 150 distributes power to various vehicle systems, at least including the traction battery 160 and the electric motor(s) 170, but also to auxiliary components of the vehicle 10.

The traction battery 160 stores energy and plays a role in managing power flow and enhancing vehicle performance. The traction battery 160 is operably connected to the high voltage bus 150 via power conditioning electronics including, for example, a bidirectional DC/DC converter that converts between the voltage level of the high voltage bus 150 and the voltage level of the traction battery 160. The traction battery 160 stores excess electrical energy generated by the fuel cell stack 110 and can be used to supplement the power provided from the fuel cell stack 110, particularly during periods of high demand, such as acceleration or climbing. The traction battery 160 also captures and stores energy generated during regenerative braking, converting kinetic energy back into electrical energy for later use. The high voltage bus 150 enables seamless integration between the fuel cell stack 110, the traction battery 160, and electric motor(s) 170, allowing for efficient power distribution and ensuring a steady supply of electricity.

The electric motor(s) 170 are configured to convert electrical energy into mechanical energy to propel the vehicle 10. These electric motor(s) 170 are operably connected to the high voltage bus 150, for example via bidirectional DC/AC inverters. Particularly, the high voltage bus 150 supplies electrical power from the fuel cell stack 110 and/or the traction battery 160 to the DC/AC inverters, which convert the DC into alternating current (AC) suitable for the electric motors 170. The electric motor(s) 170 then generate rotational force, or torque, to drive the wheels of the vehicle 10, thereby propelling the vehicle 10. In the case of regenerative braking, the electric motor(s) 170 are configured to output electrical energy back to the high voltage bus 150, via the DC/AC inverters, which rectify the AC generated by the electric motor(s) 170 during braking.

The one or more controllers 180 generally comprise at least one processor and at least one associated memory having program instructions stored thereon, which are executed by the at least one processor to achieve the described functionalities. It will be recognized by those of ordinary skill in the art that a "controller" or "processor" includes any hardware system, hardware mechanism or hardware component that processes data, signals, or other information. The controller(s) 180 may include a system with a central processing unit, multiple processing units, or dedicated circuitry for achieving specific functionality.

The one or more controllers 180 include a fuel cell controller configured to manage the operations of the fuel cell stack 110. The fuel cell controller continuously monitors various parameters such as temperature, pressure, humidity, and the electrical output of the fuel cell stack 110. The fuel cell controller regulates the flow of hydrogen and air to the fuel cell stack 110, ensuring the correct stoichiometric balance for the electrochemical reactions. By adjusting these inputs, the fuel cell controller maintains optimal operating conditions, preventing issues like fuel starvation or overheating. The fuel cell controller also coordinates with other vehicle systems to balance power output with demand and ensure efficient energy use. In this way, the fuel cell controller maximizes the fuel cell stack's efficiency and longevity, contributing to the overall performance and reliability of the vehicle 10.

The one or more controllers 180 include a battery controller configured to manage the operations of the traction battery 160. Particularly, the battery controller manages the charge and discharge cycles of the traction battery 160, ensuring optimal performance, efficiency, and longevity. This battery controller monitors key parameters such as battery state of charge (SOC), temperature, voltage, and current. The battery controller regulates the flow of electricity between the traction battery 160 and the high voltage bus 150, coordinating with the fuel cell stack 110 to supplement power during high demand and to store excess energy during regenerative braking or when the fuel cell generates surplus power. The battery controller also ensures that the battery operates within safe limits, preventing overcharging, deep discharging, and thermal runaway. By balancing the power flow and maintaining the battery within its ideal operating conditions, the battery controller enhances the efficiency of the vehicle 10, extends the lifespan of the traction battery 160, and ensures a reliable power supply for driving and auxiliary systems.

The one or more controllers 180 include a cooling system controller configured to manage the operations of the cooling system 140. The cooling system controller continuously monitors the temperature of the fuel cell stack 110 and the coolant. Based on these readings, the cooling system controller regulates the operation of components such as a coolant pump, radiator fan, and valves of the cooling system 140 to adjust the flow and temperature of the coolant. By increasing coolant flow or activating the radiator fan during high thermal loads, the cooling system 140 dissipates excess heat, preventing overheating of the fuel cell stack 110. Conversely, by reducing coolant flow during lower loads, the temperature of the fuel cell stack 110 can be maintained within its optimal temperature range. In this way, the cooling system controller ensures that the fuel cell stack 110 operates efficiently, prolonging its lifespan and maintaining consistent vehicle performance.

It should be appreciated that the fuel cell controller, the battery controller, and the cooling system controller may take the form of a single controller 180 or multiple discrete controllers 180. Accordingly, references herein to the controller 180 should be understood to refer to any or multiple of the fuel cell controller, the battery controller, and the cooling system controller described above, as well as to other controllers that serve other functions in the battery-hydrogen powertrain 100.

The one or more controllers 180 are in communication with the navigation system 20. The navigation system 20 (shown in FIG. 1) may be directly integrated with a vehicle computer and/or vehicle infotainment system. The navigation system 20 generally includes a GPS receiver, a processor, memory storing a digital map database, a display screen, and user interface (often a touchscreen). The GPS receiver triangulates signals from satellites to determine the vehicle's precise location. The processor processes this location data and overlays it onto a digital map displayed on the display screen, which provides geographic map information. The display screen and user interface allow drivers to input destinations and view real-time navigation instructions, which are determined using algorithms that consider distance, traffic conditions, and other factors. The navigation system 20 provides turn-by-turn directions, estimated arrival times, and route recalculations to guide the driver to their destination.

### Methods for Operating a Fuel Cell Electric Vehicle

A variety of operations and processes are described below for operating a fuel cell electric vehicle. In these descriptions, statements that a method, processor, and/or system is performing some task or function refers to a controller or processor (e.g., a processor of the navigation system 20 or the one or more controllers 180 of the battery-hydrogen powertrain 100) executing programmed instructions stored in non-transitory computer readable storage media (e.g., a memory of the navigation system 20 or a memory of the one or more controllers 180 of the battery-hydrogen powertrain 100) operatively connected to the controller or processor to manipulate data or to operate one or more components in the battery-hydrogen powertrain 100 or of the fuel cell electric vehicle 10 to perform the task or function. Additionally, the steps of the methods may be performed in any feasible chronological order, regardless of the order shown in the figures or the order in which the steps are described.

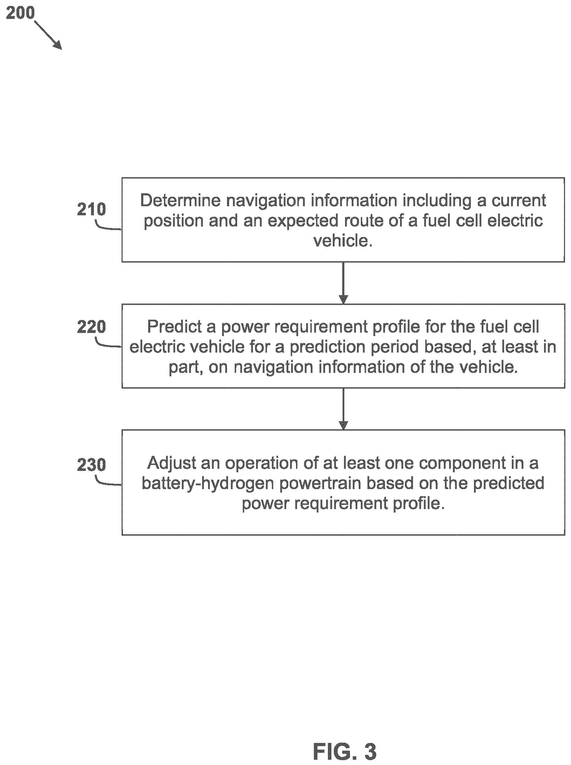

FIG. 3 shows a flow diagram for a method 200 for operating a fuel cell electric vehicle. The method 200 advantageously adopts a proactive control strategy that leverages navigation information received from a navigation system 20 to improve fuel economy, reduce degradation, and improve thermal management.

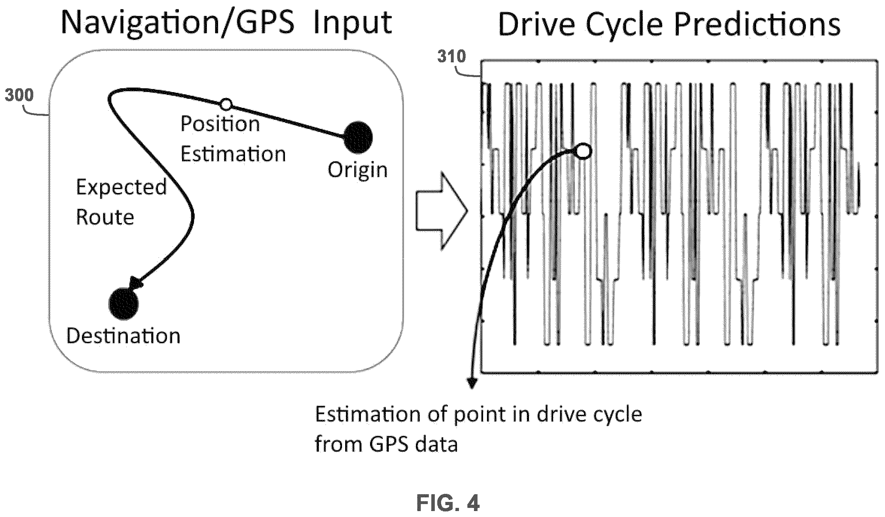

The method 200 begins with determining navigation information including a current location and an expected route of a fuel cell electric vehicle (block 210). Particularly, the navigation system 20 and/or the controller 180 of the battery-hydrogen powertrain 100 is configured to determine, provide, or receive a variety of navigation information. The navigation information at least includes a current location of the fuel cell electric vehicle 10, which is determined using the GPS receiver of the navigation system 20. As will be discussed in greater detail below, this navigation information is used to predict a power requirements profile of the fuel cell electric vehicle 10 that is used to enable proactive control strategies that improve fuel economy, reduce degradation, and improve thermal management. As shown in FIG. 4, in at least some embodiments, the navigation system 20 and/or the controller 180 determines an expected route 300 of the fuel cell electric vehicle 10 as a part of the navigation information.

In some embodiments, the navigation system 20 and/or the controller 180 determines the expected route 300 as the route that is currently programmed into the navigation system 20. When a currently programmed route is available, then the expected route 300 is known with a high certainty only subject to unexpected deviations from the currently programmed route. This enables prediction of breaks/rest stops, the prediction of reaching the final destination, as well as adjusting operation for traffic.

However, in some embodiments, the navigation system 20 may not have a currently programmed route. In such cases, the navigation system 20 and/or the controller 180 predicts the expected route 300 based on the available information. To these ends, the navigation system 20 and/or the controller 180 also determines the starting location of the fuel cell electric vehicle 10 and the final destination of the fuel cell electric vehicle 10, if available. Next, the navigation system 20 and/or the controller 180 identifies at least one prior route of the fuel cell electric vehicle 10 associated with the current location, the starting location, and/or the final destination. For this purpose, in some embodiments, the navigation system 20 is configured to store and maintain, in memory, a database or log of historical driving routes of the fuel cell electric vehicle 10. While a purely history-based route prediction does not allow for a fully proactive planning of the systems operation strategy, it is possible to optimize the system more accurately than with conventional reactive control strategies.

In some embodiments, the navigation system 20 and/or the controller 180 collects a variety of additional information describing the road along the expected route 300. In one embodiment, the navigation system 20 and/or the controller 180 determines a road type along the expected route 300, i.e. information or metrics classifying a type, nature, or quality of the road along the expected route 300, e.g., residential streets, expressways, highways, country roads, etc. In one embodiment, the navigation system 20 and/or the controller 180 determines a road elevation profile along the expected route 300, i.e., information or metrics indicating changes in elevation along the expected route 300. In one embodiment, the navigation system 20 and/or the controller 180 determines a road linearity of the expected route 300, i.e., information or metrics indicating a curviness of the road along the expected route 300 or otherwise indicating an extent to which the road is not straight.

In some embodiments, the navigation system 20 and/or the controller 180 collects further information from online resources, if available. In one embodiment, the navigation system 20 and/or the controller 180 receives traffic information regarding the expected route 300 from an online traffic data source. In one embodiment, the navigation system 20 and/or the controller 180 receives weather information regarding the expected route 300 from an online weather data source. In one embodiment, the navigation system 20 and/or the controller 180 receives additional information regarding the expected route 300 from an online monitoring system for heavy duty vehicles.

With reference again to FIG. 3, the method 200 continues with predicting a power requirement profile for the fuel cell electric vehicle for a prediction period based, at least in part, on navigation information of the vehicle (block 220). Particularly, the controller 180 predicts a power requirements profile, also referred to herein as a drive cycle, of the fuel cell electric vehicle 10 during a prediction period based on the navigation information. In at least some embodiments, the controller 180 predicts the power requirements profile 310 further based on the expected route 300 including the current location, starting location, and final destination of the of the fuel cell electric vehicle 10. FIG. 4 shows an exemplary power requirements profile 310 that is determined based on the expected route 300.

The power requirements profile 310 or drive cycle takes the form of a time series of predicted power requirements (e.g., load levels) of the fuel cell electric vehicle 10 over the course of a prediction period. The prediction period is a period of time that starts at a current time or future time and extends a predetermine amount of time into the future. In one embodiment, the prediction period has a duration between 1 minute and 120 minutes. In one embodiment, the prediction period has a duration between 5 minute and 60 minutes.

In some embodiments, the controller 180 predicts the power requirements profile 310 further based on the road type along the expected route 300. In one example, the power requirements profile 310 includes relatively greater power requirements during times at which the fuel cell electric vehicle 10 is expected to be on a road type associated with high traveling speeds (e.g., expressways, highways) compared to times at which the fuel cell electric vehicle 10 is expected to be on a road type associated with low traveling speeds (e.g., residential streets). In another example, the power requirements profile 310 includes relatively greater power requirements during times at which the fuel cell electric vehicle 10 is expected to be on a road type associated with rough driving surfaces (e.g., country roads) compared to times at which the fuel cell electric vehicle 10 is expected to be on a road type associated with smoother driving surfaces (e.g., expressways, highways, residential streets).

In some embodiments, the controller 180 predicts the power requirements profile 310 further based on the road elevation profile along the expected route 300. In one example, the power requirements profile 310 includes relatively greater power requirements during times at which the fuel cell electric vehicle 10 is expected to be traveling uphill compared to times at which the fuel cell electric vehicle 10 is expected to be traveling downhill.

In some embodiments, the controller 180 predicts the power requirements profile 310 further based on the road linearity of the expected route 300. In one example, the power requirements profile 310 includes more variable power requirements during times at which the fuel cell electric vehicle 10 is expected to be taking frequent curves requiring braking and accelerating compared to times at which the fuel cell electric vehicle 10 is expected to be traveling mostly on a straight.

In some embodiments, the controller 180 predicts the power requirements profile 310 further based on the traffic information regarding the expected route 300. In one example, the power requirements profile 310 includes more variable power requirements during times at which the fuel cell electric vehicle 10 is expected to be in heavier traffic requiring braking and accelerating compared to times at which the fuel cell electric vehicle 10 is expected to be in only light traffic. In another example, the power requirements profile 310 includes relatively greater power requirements during times at which the fuel cell electric vehicle 10 is expected to be in light traffic associated with high traveling speeds compared to times at which the fuel cell electric vehicle 10 is expected to be in heavy traffic associated with low traveling speeds.

In some embodiments, the controller 180 predicts the power requirements profile 310 further based on the weather information regarding the expected route 300. In one example, the power requirements profile 310 includes relatively greater power requirements during times at which the fuel cell electric vehicle 10 is expected to be in very cold or very hot weather (e.g., due to interior climate control usage or poor fuel efficiency) compared to times at which the fuel cell electric vehicle 10 is expected to be in moderate temperature weather. It should be appreciated that, in lieu of weather information, in some embodiments, similar predictions can be made based on historical climate data (e.g., historical temperatures) for a given geographical area. In another example, the power requirements profile 310 includes relatively greater power requirements during times at which the fuel cell electric vehicle 10 is expected to be in clear weather conditions associated with high traveling speeds compared to times at which the fuel cell electric vehicle 10 is expected to be in precipitous weather conditions associated with low traveling speeds.

In some embodiments, based on the navigation information, the navigation system 20 and/or the controller 180 predicts further information. In one embodiment, the navigation system 20 and/or the controller 180 predicts a time at which the fuel cell electric vehicle 10 will stop for a break in driving based on the expected route 300, in particular within the prediction period. In one embodiment, the navigation system 20 and/or the controller 180 predicts a time at which the fuel cell electric vehicle 10 will arrive at a final destination based on the expected route 300, in particular within the prediction period.

In one embodiment, the controller 180 predicts the power requirements profile 310 further based on the predicted time at which the fuel cell electric vehicle 10 will stop for a break. In one example, the power requirements profile 310 includes a period of little or no power consumption corresponding to the predicted stop.

In one embodiment, the controller 180 predicts the power requirements profile 310 further based on the predicted time at which the fuel cell electric vehicle 10 will arrive at the final destination. In one example, the power requirements profile 310 includes a period of little or no power consumption corresponding to the predicted time at which the fuel cell electric vehicle 10 will arrive at the final destination.

In one embodiment, the controller 180 predicts the power requirements profile 310 further based on input information from other fleet vehicles.

With continued reference to FIG. 3, the method 200 continues with adjusting an operation of at least one component in a battery-hydrogen powertrain based on the predicted power requirement profile (block 230). Particularly, the controller 180 adjusts an operation of at least one component in the battery-hydrogen powertrain 100 of the fuel cell electric vehicle 10 depending on the predicted power requirements profile 310. The controller 180 adjusts the operation of the at least one component in the battery-hydrogen powertrain 100 in order to improve fuel economy, improve thermal management, and/or to reduce component degradation. The components whose operations are adjusted include, for example, the fuel cell stack 110, the traction battery 160, the cooling system 140, and/or the electric motor(s) 170.

In some embodiments, the controller 180 uses one or more additional models to predict other relevant profiles during the prediction time period, such as a hydrogen fuel consumption profile, degradation profile, and thermal profile of the fuel cell stack 110. These models may predict such profiles as a function of relevant state parameters such as, power requirements, humidity, pressure, and state of health (e.g., of the traction battery 160). These models may take the form of a look up table, a machine learning model, or a physics/physics-hybrid model.

In one embodiment, the controller 180 predicts, using a hydrogen fuel consumption model, a hydrogen fuel consumption and/or a hydrogen fuel consumption profile (i.e., hydrogen fuel consumption over time) based on the predicted power requirements profile 310. Based on the predicted power requirements profile 310 and/or the predicted hydrogen fuel consumption and/or hydrogen fuel consumption profile, the controller 180 adjusts operation of the at least one component in the battery-hydrogen powertrain 100 to reduce an actual hydrogen fuel consumption of the fuel cell electric vehicle 10.

In some embodiments, to improve fuel economy, the controller 180 preemptively discharges the traction battery 160 prior to a time at which regenerative braking is expected to occur based on the expected route 300, for example when traversing downhill is expected. In this way, the traction battery 160 is sufficiently discharged so that it can store energy generated during regenerative braking, as well as store excess power generated by the fuel cell stack 110 during this period of minimal required power.

In some embodiments, to improve fuel economy, the controller 180 preemptively charges the traction battery 160 prior to a time at which the predicted power requirements profile 310 exceeds a first power threshold, for example when traversing uphill is expected. In this way, when high power requirements are expected, the traction battery 160 is sufficiently charged so that it can supplement power generation by the fuel cell stack 110 to avoid excessive, low-efficiency, hydrogen consumption.

In one embodiment, the controller 180 predicts, using a degradation model, a degradation and/or a degradation profile of the fuel cell stack 110 and/or the traction battery 160 based on the predicted power requirements profile 310. Based on the predicted power requirements profile 310 and/or the predicted degradation and/or degradation profile, the controller 180 adjusts operation of the at least one component in the battery-hydrogen powertrain 100 to reduce an actual degradation of the fuel cell stack 110 and/or the traction battery 160.

In some embodiments, to reduce degradation of the fuel cell stack 110, the controller 180 preemptively discharges the traction battery 160 prior to a time at which the predicted power requirements profile 310 falls below a second power threshold, for example when traversing downhill or temporary stopping is expected. In this way, when low power requirements are expected, the traction battery 160 is sufficiently discharged so that it can store excess power generated by the fuel cell stack 110 and to avoid operating the fuel cell stack 110 in a low output or low load operating state that would result in high voltages that may be more aggressively clipped.

In one embodiment, the controller 180 predicts, using a thermal model, a thermal profile (i.e., temperatures over time) of the fuel cell stack 110 based on the predicted power requirements profile 310. Based on the predicted power requirements profile 310 and/or the thermal profile, the controller 180 adjusts operation of the at least one component in the battery-hydrogen powertrain 100 to optimize an actual thermal profile of the fuel cell stack 110.

In some embodiments, to improve thermal management and/or to reduce degradation, the controller 180 preemptively turns on the cooling system 140 and/or increases a cooling amount of the cooling system 140 prior to a time at which the thermal profile exceeds a first thermal threshold and/or the predicted power requirements profile 310 exceeds a first power threshold. In this way, when high heat generation is expected, the fuel cell stack 110 is pre-cooled to a cooler temperature in preparation.

In some embodiments, to reduce degradation, when the fuel cell electric vehicle 10 is at a predetermined approach distance from the final destination or at a predetermined approach time prior to when the fuel cell electric vehicle 10 is expected to reach the final destination, the controller 180 charges the traction battery 160 and then shuts down the fuel cell stack 110. In this way, the fuel cell electric vehicle 10 is operated only on battery power during a period shortly before arriving at the final destination. This advantageously, gives the fuel cell stack 110 adequate time to dry prior to arriving at the final destination.

In some embodiments, to improve thermal management and/or to reduce degradation, the controller 180 adjusts operation of at least one component of the battery-hydrogen powertrain 100 depending on weather information. In one example, when the ambient temperature is relatively colder, then the controller 180 adjusts the predetermined approach distance or the predetermined approach time to be relatively larger/longer. In this way, during cold weather, freeze starts can be prevented by providing the fuel cell stack 110 adequate time to dry prior to arriving at the final destination.

In one embodiment, the controller 180 estimates geographical powertrain efficiency and adapts a key product index (KPI) to the data from a region with the most extreme weather and road conditions. In one embodiment, an operator of the fuel cell electric vehicle 10 may select their preferred weightings of KPI's in which powertrain operations are optimized with respect to. For example, the operator may select their preferred balance between the possibly competing goals of improved fuel economy and reduced degradation.

Embodiments within the scope of the disclosure may also include non-transitory computer-readable storage media or machine-readable medium for carrying or having computer-executable instructions (also referred to as program instructions) or data structures stored thereon. Such non-transitory computer-readable storage media or machine-readable medium may be any available media that can be accessed by a general purpose or special purpose computer. By way of example, and not limitation, such non-transitory computer-readable storage media or machine-readable medium can comprise RAM, ROM, EEPROM, CD-ROM or other optical disk storage, magnetic disk storage or other magnetic storage devices, or any other medium which can be used to carry or store desired program code means in the form of computer-executable instructions or data structures. Combinations of the above should also be included within the scope of the non-transitory computer-readable storage media or machine-readable medium.

Computer-executable instructions include, for example, instructions and data which cause a general-purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

While the disclosure has been illustrated and described in detail in the drawings and foregoing description, the same should be considered as illustrative and not restrictive in character. It is understood that only the preferred embodiments have been presented and that all changes, modifications and further applications that come within the spirit of the disclosure are desired to be protected.

## Claims

1. A method for operating a fuel cell electric vehicle, the method comprising:
determining, with a navigation system, a current location of the vehicle;
predicting, with a controller, a power requirements profile of the vehicle for a prediction period based on the current location of the vehicle; and
adjusting, with the controller, an operation of at least one component in a battery-hydrogen powertrain of the vehicle depending on the predicted power requirements profile.

2. The method according to claim 1 further comprising:
determining an expected route of the vehicle using the navigation system,
wherein the power requirements profile is predicted further based the expected route.

3. The method according to claim 2, the determining the expected route further comprising:
identifying at least one prior route of the vehicle associated with the current location of the vehicle; and
determining the expected route based on the at least one prior route.

4. The method according to claim 3, the identifying the at least one prior route further comprising:
determining a starting location of a current route of the vehicle using a navigation system of the vehicle; and
identifying the at least one prior route of the vehicle associated with the current location of the vehicle and associated with the starting location of the current route.

5. The method according to claim 2, the determining the expected route further comprising:
determining a currently programmed route of the vehicle using the navigation system; and
determining the expected route based on the currently programmed route.

6. The method according to claim 2 further comprising:
determining at least one of (i) a road type along the expected route, (ii) a road elevation profile along the expected route, or (iii) a road linearity of the expected route; and
wherein the power requirements profile is predicted further based on the at least one of (i) the road type along the expected route, (ii) the road elevation profile along the expected route, or (iii) the road linearity of the expected route.

7. The method according to claim 2, the predicting further comprising:
predicting a time at which the vehicle will stop for a break in driving during the prediction period based on the expected route; and
wherein the power requirements profile is predicted further based on the predicted time at which the vehicle will stop for the break.

8. The method according to claim 2, the predicting further comprising:
predicting a time at which the vehicle will arrive at a final destination during the prediction period based on the expected route; and
wherein the power requirements profile is predicted further based on the predicted time at which the vehicle will arrive at the final destination.

9. The method according to claim 2, the predicting further comprising:
receiving at least one of (i) traffic information or (ii) weather information corresponding to the expected route; and
wherein the power requirements profile is predicted further based on the at least one of (i) the traffic information or (ii) the weather information.

10. The method according to claim 2, the adjusting further comprising:
preemptively discharging a traction battery of the vehicle prior to a time at which regenerative braking is expected to occur based on the expected route.

11. The method according to claim 2, the adjusting further comprising:
predicting a time at which the vehicle will arrive at a final destination based on the expected route; and
shutting down a fuel cell stack of the vehicle prior to the vehicle reaching the final destination.

12. The method according to claim 1, the adjusting further comprising:
preemptively charging a traction battery of the vehicle prior to a time at which the predicted power requirements profile exceeds a first power threshold.

13. The method according to claim 1, the adjusting further comprising:
preemptively discharging a traction battery of the vehicle prior to a time at which the predicted power requirements profile falls below a second power threshold.

14. The method according to claim 1, the adjusting further comprising:
receiving at least one of (i) weather information or (ii) traffic information; and
wherein the operation of the at least one component is adjusted depending on the at least one of (i) the weather information or (ii) the traffic information.

15. The method according to claim 1 further comprising:
predicting, using a degradation model, a degradation of at least one of (i) a fuel cell stack or (ii) a traction battery of the vehicle based on the predicted power requirements profile,
wherein the operation of the at least one component is adjusted to reduce an actual degradation of the at least one of (i) the fuel cell stack or (ii) the traction battery based on the predicted power requirements profile and the predicted degradation.

16. The method according to claim 1 further comprising:
predicting, using a consumption model, a hydrogen fuel consumption based on the predicted power requirements profile,
wherein the operation of the at least one component is adjusted to reduce an actual hydrogen fuel consumption of the vehicle based on the predicted power requirements profile and the predicted hydrogen fuel consumption.

17. The method according to claim 1 further comprising:
predicting, using a thermal model, a thermal profile of a fuel cell stack of the vehicle based on the predicted power requirements profile,
wherein the operation of the at least one component is adjusted to optimize an actual thermal profile of the fuel cell stack based on the predicted power requirements profile and the predicted thermal profile.

18. The method according to claim 17, the adjusting further comprising:
preemptively operating a cooling system to cool a fuel cell stack of the vehicle prior to a time at which the thermal profile exceeds a first thermal threshold.

19. The method according to claim 1, wherein the at least one component includes at least one of (i) a fuel cell stack of the vehicle, (ii) a traction battery of the vehicle, or (iii) a cooling system of the vehicle configured to cool the fuel cell stack.

20. The method according to claim 1, wherein the prediction period has a duration between 1 minute and 120 minutes.
